# EUROPÄISCHE PATENTANMELDUNG

(11) **EP 0 916 766 A1**
(43) Veröffentlichungstag der Anmeldung: **19.05.1999**
(21) Anmeldenummer: 98121335.8
(22) Anmeldetag: 10.11.1998
(51) Int. Cl.: E01C 5/06

(54) **Betonpflasterstein**

(30) Priorität: 14.11.1997 DE 29720180 U
(71) Anmelder: Kortmann, Karl, 48465 Schüttorf (DE)
(72) Erfinder: Kortmann, Karl, 48465 Schüttorf (DE)
(74) Vertreter: Busse & Busse Patentanwälte

(57) **Zusammenfassung**

Ein Betonformstein weist an seinen Seitenflächen 3;11,12;11',12' jeweils zumindest einen in Verlegestellung zu einem nebengeordneten Stein 1 hin eine Sollfuge 2 bildenden Abstandhalter 4;4';4'' auf. Der Abstandhalter 4;4'' ist als ein zweiteiliger Formvorsprung mit einem eine nach DIN genormte Sollfuge 2 definierenden ersten Anlageteil 5 sowie einem im Verbund als Lagesicherung wirksamen zweiten Anlageteil 6;6' geformt.

## Beschreibung

Die Erfindung betrifft einen Betonpflasterstein nach dem Oberbegriff des Anspruchs 1.

Bekannte Betonpflastersteine dieser Art nach DIN 18501 ("Pflastersteine") können mit produktionstechnisch bedingten Maßabweichungen, beispielsweise 3 mm in der Länge und/oder Breite, ausgeliefert werden. Damit diese Maßabweichungen auf Verlegeflächen mit Steinen großer Maßtoleranz nicht durch ein unregelmäßiges Fugenbild sichtbar werden, sind gemäß DIN 18318 "Straßenbauarbeiten, Pflasterdecken und Plattenbelege" die Pflastersysteme mit einer Sollfuge von 3 bis 5 mm Abstand so herzustellen, daß das System als versiegelte Pflasterfläche definiert ist, die zur Oberflächenentwässerung randseitige Rinnen und Schächte aufweist. Bei hohen Schub- und/oder Drehbelastungen der Betonpflastersteine sind im Bereich der mit Sand o. dgl. verfüllten Sollfuge nachteilige Lageveränderungen der Steine und eine Beschädigung des Gesamtsystems möglich.

Bekannt ist außerdem eine Vielzahl von Betonpflastersteinen mit Abstandhaltern (DE 44 05 616; DE 196 18 011; DE 297 02 544; DE 38 04 760), die zur Bildung einer wasserdurchlässigen Fahrbahn an sogenannten Rasenpflastersteinen vorgesehen sind. Diese weisen eine Verzahnung mit aneinanderliegenden Abstandhaltern derart auf, daß im Pflasterverbund in der Abstandsfuge hinreichende Durchlaßöffnungen für eine vollständige Versickerung von Oberflächenwasser verbleiben und damit eine versiegelte Pflasterfläche nicht herstellbar ist.

Die Erfindung befaßt sich mit dem Problem, einen Betonpflasterstein zu schaffen, dessen an den jeweiligen Seitenflächen befindliche Abstandhalter in Verlegestellung der Steine bei Einhaltung einer Sollfugenbreite für eine versiegelte Pflasterfläche mit geringem Aufwand eine Verbesserung der Verbundstabilität ermöglichen.

Ausgehend von einem Betonpflasterstein nach dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 10 verwiesen.

Der erfindungsgemäße Betonpflasterstein weist mit vergleichsweise geringen Maßabweichungen gefertigte und eine für Betonelemente überraschende Formgenauigkeit darbietende Seitenflächen auf, an denen die üblicherweise zum Ausgleich von Maßabweichungen und zur Bildung der Sollfuge vorgesehenen Abstandhalter (sogenannte Platzhalter) nach Art eines Verhakungsprofils so geformt sind, daß bei lückenloser Aneinanderlage der benachbarten Seitenflächen innerhalb einer für versiegelte pflasterflächen vorgesehenen Sollfuge ein in die Herstellungstoleranz der Pflastersteine integrierbares Verhakungssystem erreicht ist. Damit sind die erfindungsgemäßen Steine in einer Verbundstellung zu einem Pflastersystem verlegbar, dessen in der Schub- und/oder Drehbelastungen lagestabil aufnehmenden Aneinanderlage positionierte Einzel-Steine gleichzeitig die Bildung der in der Pflasterfläche sichtbaren Soll-Fugenbreite ermöglichen, die nur im oberen Bereich vollständig mit einem Fugenmaterial in Form von Sand, Kies o. dgl. körnigem Material verfüllt wird. Die Draufsicht bei fertiger Pflasterfläche und mit Sand verfüllten Fugen unterscheidet sich nicht von der Draufsicht bei normalen Pflasterflächen nach DIN 18318. Die klassischen Formate wie Dreieck, Quadrat, Rechteck, Fünfeck, Sechseck, Achteck, Kreis und Karo bleiben in der Optik bei fertig verlegten Pflaster erhalten. Im bodennahen Bereich bilden die Seitenflächen und die Abstandhalter einen weitgehend undurchlässigen Verschluß durch linien- oder flächenmäßige Stützpaarungen, so daß die versiegelte Fläche erreicht ist.

Der Abstandhalter ist dabei als ein zweiteiliger Formvorsprung mit einem die Breite der Sollfuge definierenden ersten Anlageteil sowie einem mit diesem im Verbund als Lagesicherung wirksamen zweiten Anlageteil geformt, wobei ein zwischen diesen Anlageteilen in Einbaulage vertikal verlaufender Anlagebereich eine horizontale Verschiebung der Steine nach Art eines Widerlagers weitgehend unterbindet und damit bei hohen Belastungen an der Oberseite des Einzelsteins dessen Lage-Stabilität vorteilhaft verbessert ist.

Weitere Einzelheiten und Vorteile der Erfindung ergeben sich aus der nachfolgenden Beschreibung und den Zeichnungen, die mehrere Ausführungsbeispiele des erfindungsgemäßen Betonpflastersteins veranschaulichen. In der Zeichnung zeigen:
- Fig. 1: eine Draufsicht mehrerer in einer Verbundverlegung befindlicher Betonpflastersteine erfindungsgemäßer Ausbildung,
- Fig. 2: eine vergrößerte Ausschnittsdarstellung ähnlich Fig. 1,
- Fig. 3 bis Fig. 5: jeweilige Schnittdarstellungen im Bereich einer Sollfuge gemäß den Linien III-III, IV-IV und V-V in Fig. 1,
- Fig. 6: eine perspektivische Ausschnittsdarstellung des Betonpflastersteins in einem Eckbereich mit einem Abstandshalter,
- Fig. 7: eine Draufsicht auf den erfindungsgemäßen Betonpflasterstein in einer zweiten Ausführungsform mit veränderter Rechteckkontur,
- Fig. 8 und Fig. 9: jeweilige Schnittdarstellungen des Betonpflastersteins gemäß den Linien VIII-VIII und IX-IX in Fig. 7,
- Fig. 10 und Fig. 11: eine dritte Ausführungsform des Betonpflastersteins mit einem einteiligen Formvorsprung als Abstandhalter,
- Fig. 12: eine vierte Ausführungsform des Betonpflastersteins mit dem einen veränderten Anlagebereich aufweisenden Abstandhalter,
- Fig. 13: eine Draufsicht auf mehrere der Betonpflastersteine mit den Abstandhaltern gemäß Fig. 12 in Verlegestellung,
- Fig. 14: eine Draufsicht mehrerer Betonpflastersteine mit veränderter Umfangskontur in Verlegestellung,
- Fig. 15: eine Draufsicht auf Steine ähnlich Fig. 14 mit veränderten Abstandhaltern, und
- Fig. 16: eine vergrößerte Ausschnittsdarstellung der Pflasterung mit den geometrischen Verhätnissen in der Verlegefuge.

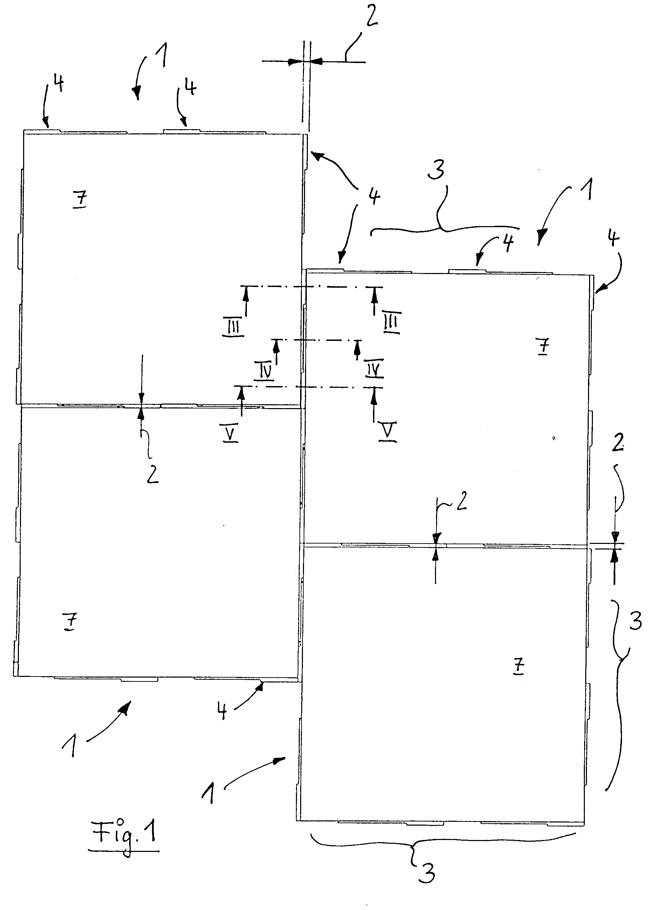

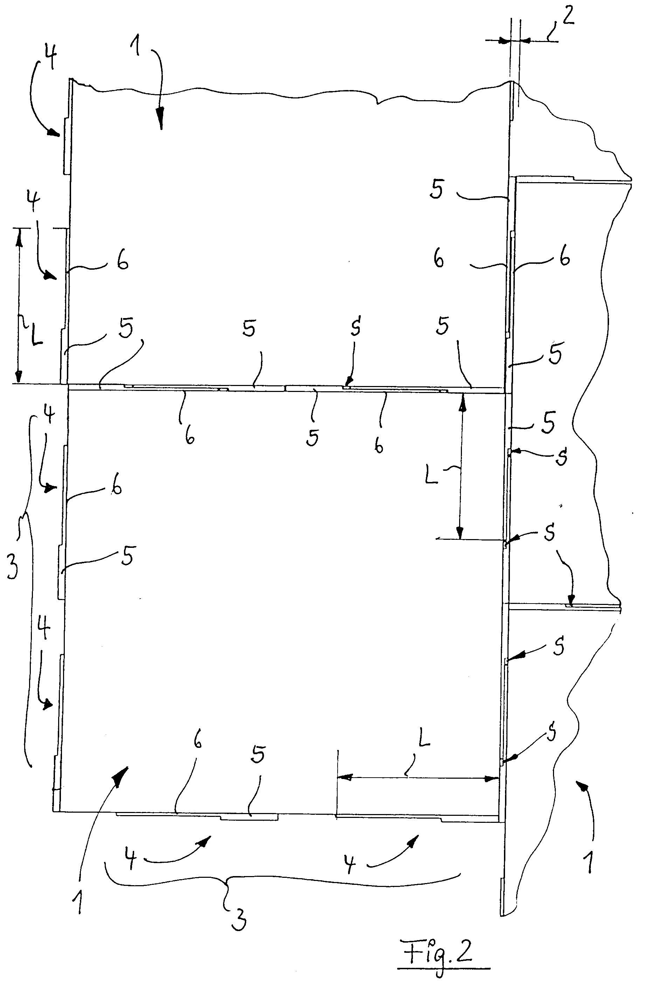

In Fig. 1 sind jeweilige mit 1 bezeichnete Betonpflastersteine in einer Draufsicht dargestellt, wobei die Verbundverlegung der Steine 1 und eine dabei in Längs- und Querrichtung verlaufende Sollfuge 2 zwischen den aneinanderliegenden Bereichen der jeweiligen Seitenflächen 3 deutlich wird. Die Betonpflastersteine 1 sind dabei an den Seitenflächen 3 jeweils mit einem in Verlegestellung zu einem nebengeordneten Stein hin die Sollfuge 2 bildenden Abstandhalter 4 versehen (Fig. 2), wobei die Sollfuge 2 insbesondere eine Breite von weniger als 5 mm aufweisen kann.

Die erfindungsgemäß ausgebildeten Betonpflastersteine 1 weisen für diese Verlegung jeweilige Abstandhalter 4 auf, die als ein zweiteiliger Formvorsprung geformt sind, der mit einem die Sollfuge 2 definierenden ersten Anlageteil 5 sowie einem im dargestellten Verbund auch als zusätzliche Lagesicherung wirksamen zweiten Anlageteil 6 versehen ist.

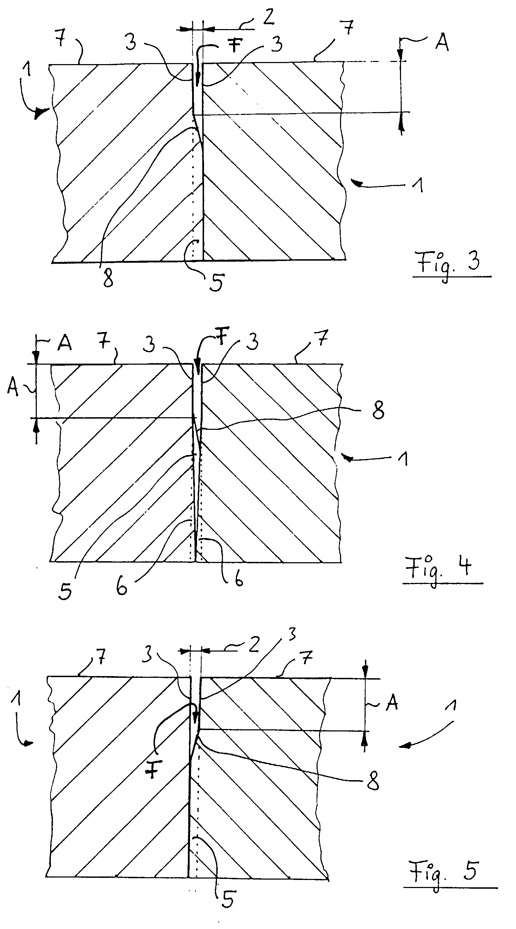

Die vergrößerten Ausschnittsdarstellungen gemäß Fig. 3 bis 5 verdeutlichen die Kontur der beiden Anlageteile 5 und 6, wobei der erste Anlageteil 5 von einem im Abstand A zur Steinoberseite 7 in der jeweiligen Seitenfläche 3 verlaufenden und zu dieser hin eine obere Dachschräge 8 aufweisenden quaderförmigen Ansatz gebildet ist (Fig. 3, Fig. 5). Der zweite Anlageteil 6 ist als ein in seiner Höhe H dem ersten Anlageteil 5 entsprechender, nur einen Teilbereich von dessen Vorsprungsmaß B (das bei exakter Anlage benachbarter Steine der jeweiligen Sollfuge 2 entspricht) aufweisender Ansatz ausgebildet, der zur Steinoberseite 7 hin keilförmig verläuft (Fig. 4) und unterhalb von dieser im Abstand A endet.

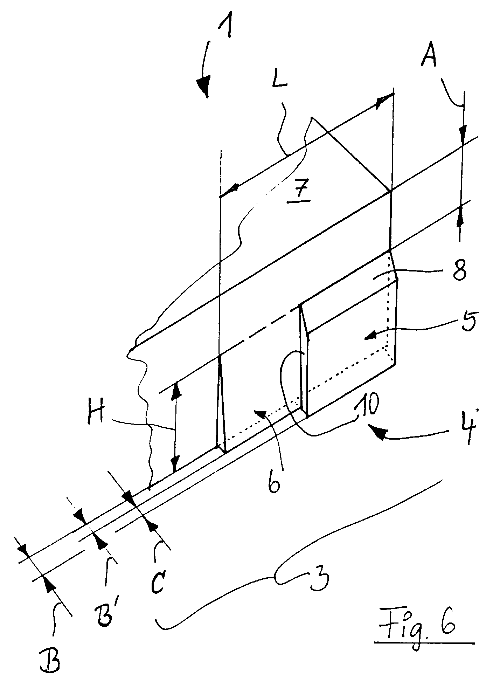

In Fig. 6 sind die vorbeschriebenen Größenverhältnisse
im Bereich der Abstandhalter 4 in einer vergrößerten Darstellung sichtbar, wobei durch Punktlinien die jeweilige Raumform im Bereich der Anlageteile 5 und 6 verdeutlicht ist. In zweckmäßiger Ausführung ist die fußseitige Breite B des ersten Anlageteiles 5 so bemessen, daß die Breite B' des zweiten Anlageteiles 6 und die eines Aufnahmebereiches C gleichgroß sind. Ebenso ist denkbar, B' kleiner als C zu bemessen. Gleichzeitig ist eine vertikale Anlagefläche 10 definiert, mittels der die Verhakung der Steine 1 (Fig. 2) erreicht werden kann, so daß horizontale Schiebe- und/oder Drehbewegungen am Einzelstein vermieden sind und das gesamte Pflastersystem langzeitstabil ohne Beschädigungen belastbar ist. Die Länge L der Abstandhalter 4 ist für eine einfache Verlegung der Steine so bemessen, daß in deren Verbindungsstellung vor den jeweiligen Anlageflächen 10 auch ein geringer vertikaler Spalt S verbleiben kann (Fig. 2).

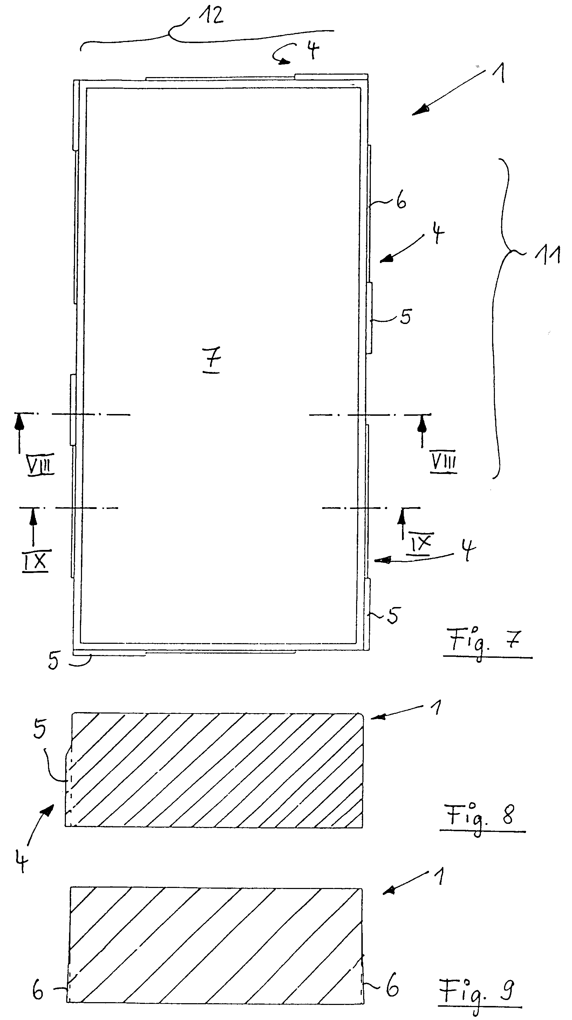

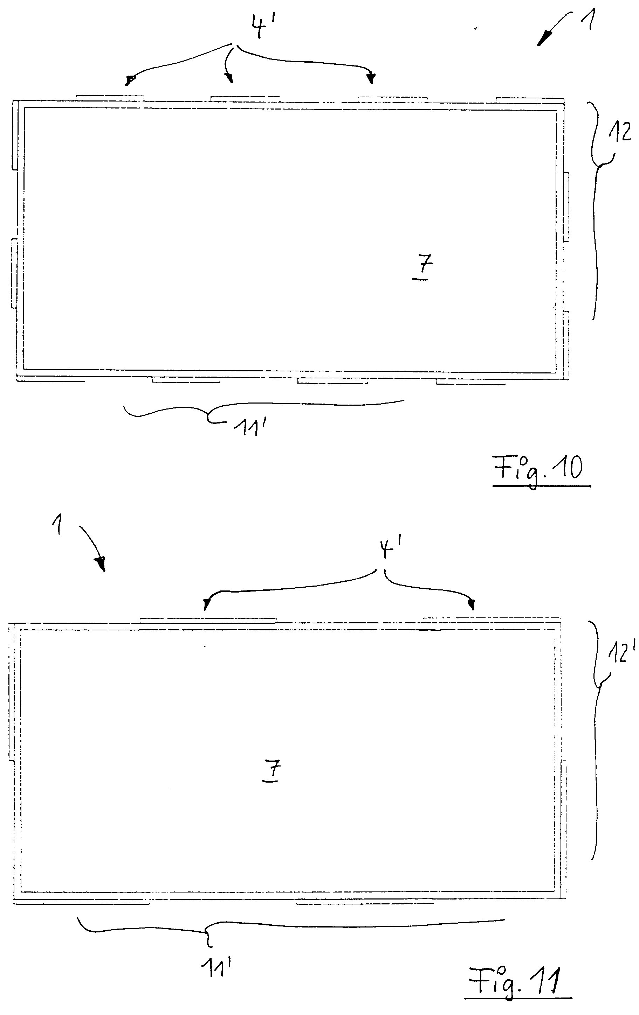

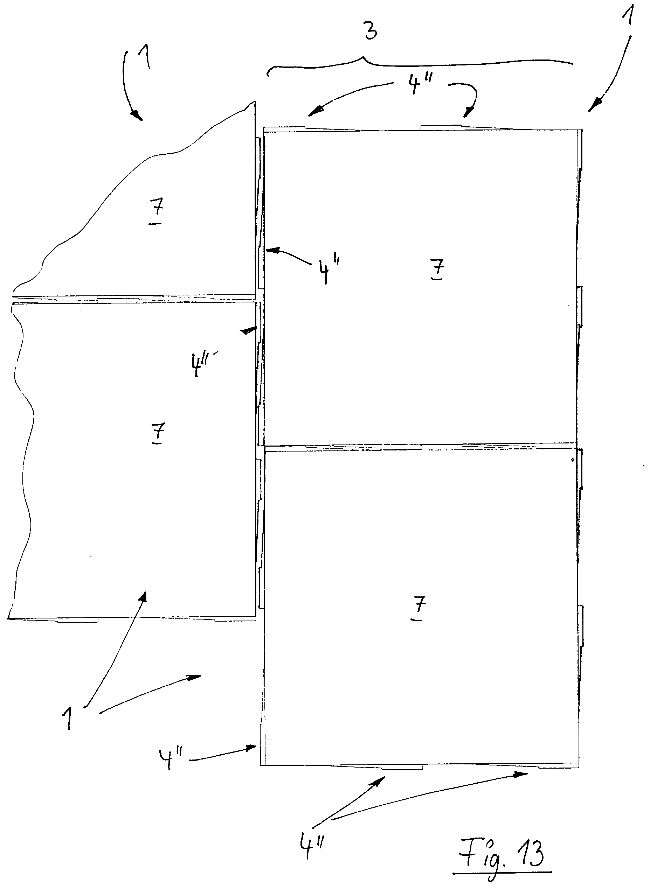

In Fig. 7 bis 9 ist der Betonpflasterstein 1 in einer zweiten Ausführungsform mit einer Rechteckkontur an Stelle der quadratischen Umfangskontur (Fig. 1, Fig. 13) dargestellt. In dieser Ausführungsform sind die Steine 1 ausgehend von ihren jeweiligen Eckbereichen gleichsinnig umlaufend mit jeweils dem ersten Anlageteil 5 und dem daran in Umfangsrichtung anschließenden zweiten Anlageteil 6 versehen. Die Steine 1 gemäß Fig. 1 (und Fig. 13) weisen im Uhrzeigersinn gleichsinnig angeordnete Abstandhalter 4 auf und bei den Steinen 1 gemäß Fig. 7, Fig. 10 und Fig. 11 weisen die Abstandhalter 4 entgegen dem Uhrzeigersinn gleichmäßig beabstandete Abstandhalter 4 auf, wobei dessen erster Anlageteil 5 jeweils unmittelbar an einen Eckbereich angrenzt.

Der eine quadratische Umfangskontur aufweisende Betonpflasterstein 1 gemäß Fig. 1 weist an jeder seiner Seitenflächen 3 zwei der zweiteiligen Formvorsprünge als Abstandhalter 4 auf und in der Ausführungsform gemäß Fig. 7 sind an der Längsseite 11 zwei Formvorsprünge und an der Querseite 12 jeweils ein Formvorsprung als Abstandhalter 4 vorgesehen.

Die Ausführungsform der Betonpflastersteine 1 gemäß Fig. 10 und 11 weist jeweils mehrere Abstandhalter 4'
auf, die als einstückige Ansätze mit quaderförmiger Kontur geformt sind, so daß in der Verbindungsstellung (nicht dargestellt) mehrere Verhakungsbereiche gebildet sind.
Die Maß- und Formgenauigkeit dieser Steine 1 im Bereich der aneinanderliegenden Seitenflächen 11',12' weist dabei unterhalb des fachgemäß üblichen liegende Toleranzmaße auf, so daß damit das vorbeschriebene Anlage- und Verhakungssystem im Bereich der Abstandhalter 4' realisierbar ist.

Die Steine 1 sind in erfindungsgemäßer Ausführung mit einer Maßtoleranz von weniger als 1 mm in sämtlichen Längenabmessungen gefertigt, so daß die Breite B des Anlageteils 5 beispielsweise 2 mm betragen kann.

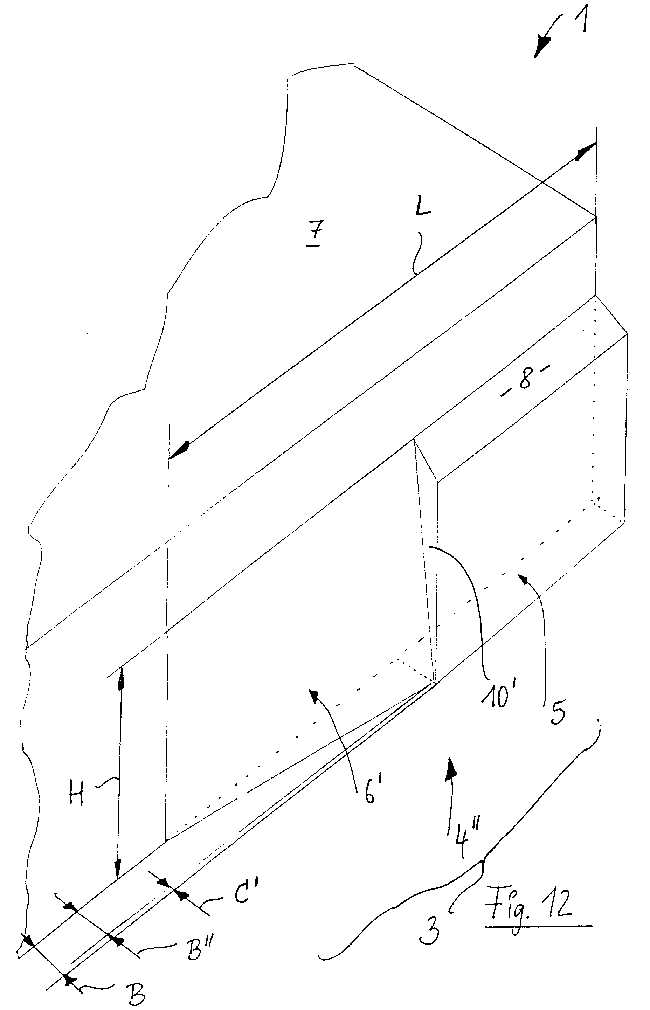

In Fig. 12 und 13 ist eine dritte Ausführungsform der Steine 1 mit Abstandhaltern 4'' dargestellt, wobei die räumliche Darstellung gemäß Fig. 12 (ähnlich Fig. 6) den veränderten Konturverlauf im Bereich des zweiten Anlageteiles 6' bzw. der Anlagefläche 10' verdeutlicht. Mit dieser Gestaltung der Abstandhalter 4'' ist die Herstellung vereinfacht und gleichzeitig auch mit der verkleinerten Anlagefläche 10' eine hinreichende Verbundstabilität mehrerer der Betonpflastersteine 1 (Fig. 13) erreicht.

In der Verlegestellung wird in eine jeweilige Fuge F (Fig. 3 bis Fig. 5) Sand zur Verfüllung eingebracht, so daß danach die Verhakung der Steine verdeckt ist und die Pflasterfläche von einer Fuge gemäß DIN 18318 nicht zu unterscheiden ist. Die erfindungsgemäßen Abstandhalter 4,4',4'' sind in ihrer Anwendung nicht auf Rechtecksteine begrenzt, vielmehr ist deren Einsatz auch an anderen polygonalen Steinformen denkbar.

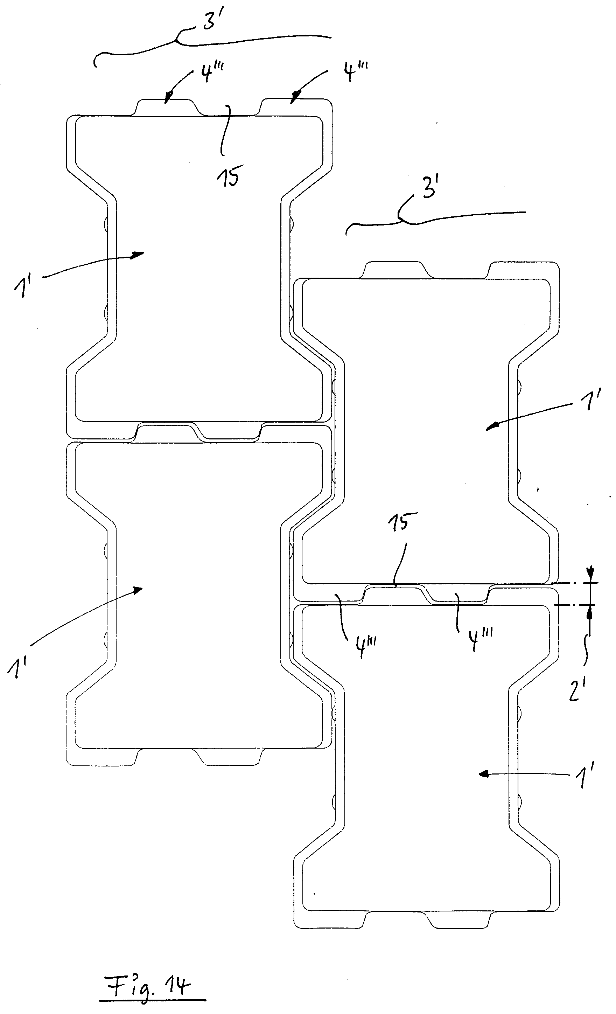

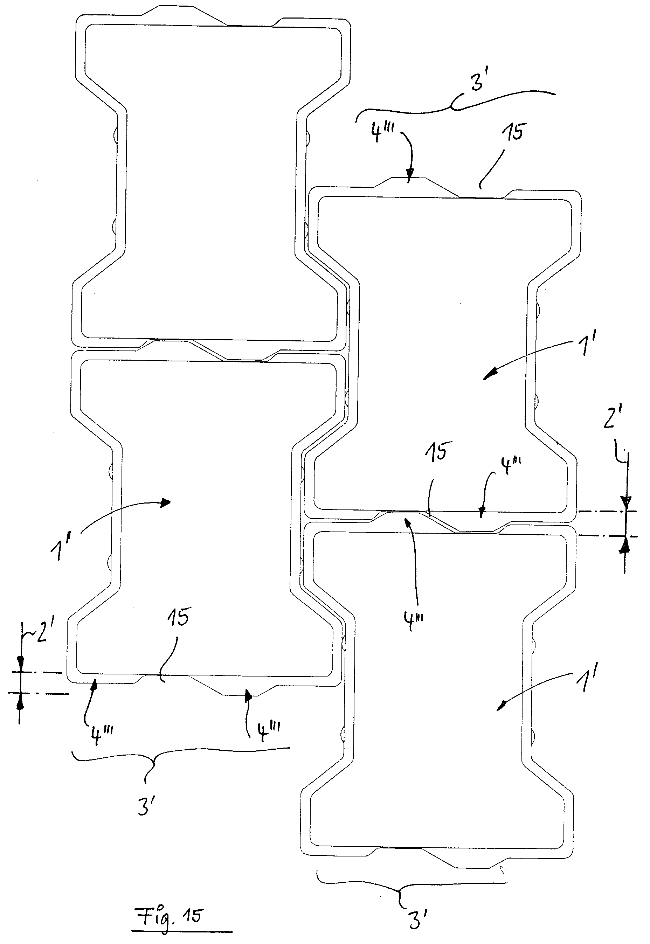

In Fig. 14 und 15 sind Doppel-T-Steine 1' in Verlegestellung dargestellt, wobei an den jeweiligen Schmalseitenflächen 3' der Steine 1' ein in die Breite der Sollfuge 2' integriertes Verhakungssystem mit Abstandhaltern 4''' und komplementären Aufnahmekonturen 15 vorgesehen ist. Damit sind die aneinanderliegenden Schmalseitenflächen 3' benachbarter Steine 1' mit verhakenden und aneinanderliegenden Profilformen versehen, die ein in der Verlegetoleranz einer versiegelten Pflasterfläche befindliches Anlage- und Verhakungssystem bilden.

Die versiegelten Pflasterflächen mit den vorbeschriebenen Steinen 1 und 1' weisen zumindest die gemäß DIN 18501 vorgesehenen Fertigungsgenauigkeiten auf (Nennmaßtoleranz: ± 3 mm) und verwirklichen gleichzeitig ein fugenintegriertes Verhakungssystem, mit dem eine wesentliche Erhöhung der Belastungsstabilität derartiger versiegelter Pflasterflächen erreicht ist. Die in Richtung der Höhe H der Abstandhalter 4,4',4'',4''' (Fig. 6) bzw. am Abstandsteil 6,6' (Fig. 12) keilförmigen Anlageprofile nehmen den Füllsand, Kies o. dgl. als Füllmaterial so auf, daß über eine Kornklemmung in sich verengenden Aufnahmeräumen (Fig. 3 bis Fig. 5) eine vertikale und/oder horizontale Keilwirkung des Füllsandes zwangsläufig erreicht ist und damit die versiegelte Pflasterfläche nach Art einer Selbststabilisierung langzeitstabil verbundene Einzelsteine aufweist.

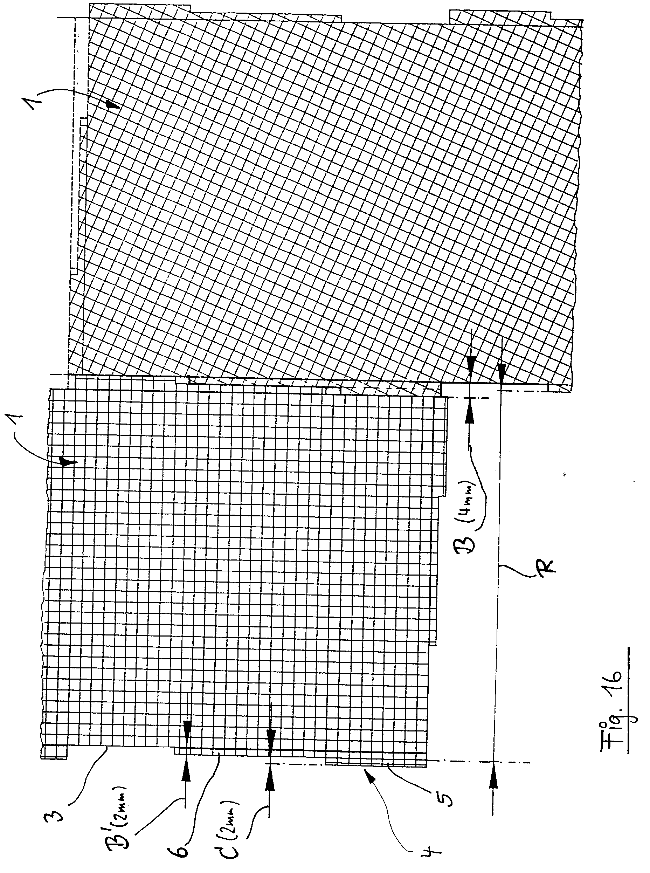

In Fig. 16 ist die Verlegestellung der Steine 1 (hier zur Verdeutlichung dargestellt mit unterschiedlicher Kreuzschraffur) mit einem auf der Baustelle vorgegebenen Rastermaß R verdeutlicht, mit dem eine Pflasterfläche und deren Belegung unter Beachtung der Maßtoleranzen berechnet sind. Auf dieses Maß R sind die Abmessungen der Steine 1 so abgestimmt, daß die gemäß der Verlegevorschrift (DIN 18318, S. 10, Pkt. 3.3) in der Fugenbreite B möglichen Toleranzen von 3 bis 5 mm (hier dargestellt B=4 mm) eingehalten werden und nur innerhalb dieses Bereichs die Verkakung der Abstandhalter 4 gebildet ist. Die erfindungsgemäßen Abstandhalter 4 (Platzhalter) werden so hergestellt, daß der jeweilige erste Anlageteil 5 bezogen auf das Rastermaß R (Verlegemaß) als Übermaß C (z. B. 2 mm) vorliegt und der zweite Anlageteil 6 mit seinem Maß B' (2 mm) von der Seitenfläche 3 bis zum Rastermaß R verläuft. Nach der Sandverfüllung der Fugen F (Fig. 3 bis 5) ist eine Pflasterung mit einem gleichmäßigen Fugenraster sichtbar, unter dem die Verhakung verläuft.

## Patentansprüche

1. Betonpflasterstein, an dessen Seitenflächen (3;11,12;11',12') jeweils zumindest ein in Verlegestellung zu einem nebengeordneten Stein (1) hin eine Sollfuge (2) bildender Abstandhalter (4;4';4'') vorgesehen ist, **dadurch gekennzeichnet**, daß der Abstandhalter (4;4'') als ein zweiteiliger Formvorsprung mit einem die Sollfuge (2) definierenden ersten Anlageteil (5) sowie einem im Verbund als Lagesicherung wirksamen zweiten Anlageteil (6;6') geformt ist, derart, daß die Anlageteile (5 und 6;6') sowie die Seitenflächen (3) benachbarter Betonpflastersteine (1;1') als flächige oder linienförmige Stützpaarungen aneinanderliegen und eine versiegelte Pflasterfläche mit einer Verhakung der Steine (1;1') in der Sollfuge (2) definieren.

2. Betonpflasterstein nach Anspruch 1, dadurch gekennzeichnet, daß der erste Anlageteil (5) von einem im Abstand (A) zur Steinoberseite (7) in der Seitenfläche (3) verlaufenden und zu dieser hin eine obere Dachschräge (8) aufweisenden quaderförmigen Ansatz gebildet ist.

3. Betonpflasterstein nach Anspruch 1 oder 2, dadurch gekennzeichnet, daß der zweite Anlageteil (6;6') als ein in seiner Höhe (H) dem ersten Anlageteil (5) entsprechender, nur einen Teilbereich (B';B'') von dessen Vorsprungsmaß (B) aufweisender und zur Steinoberseite (7) hin keilförmig verlaufender Ansatz ausgebildet ist.

4. Betonpflasterstein nach einem der Ansprüche 1 bis 3, dadurch gekennzeichnet, daß der eine rechteckige Umfangskontur aufweisende Stein (1) ausgehend von seinen jeweiligen Eckbereichen gleichsinnig umlaufend mit jeweils dem ersten Anlageteil (5) und dem daran in Umfangsrichtung anschließenden zweiten Anlageteil (6;6') versehen ist, wobei der erste Anlageteil (5) jeweils unmittelbar an einen Eckbereich angrenzt.

5. Betonpflasterstein nach einem der Ansprüche 1 bis 4, dadurch gekennzeichnet, daß der Stein (1) eine quadratische Umfangskontur aufweist und an jeder seiner Seitenflächen (3) zwei der zweiteiligen Formvorsprünge als Abstandhalter (4;4'') vorgesehen sind.

6. Betonpflasterstein nach einem der Ansprüche 1 bis 4, dadurch gekennzeichnet, daß der Stein (1) parallele Längsseiten (11) mit jeweils zwei der zweiteiligen Formvorsprüngen (4) und parallele Schmalseiten (12) mit jeweils einem zweiteiligen Formvorsprung (4) aufweist.

7. Betonpflasterstein nach einem der Ansprüche 1 bis 6, dadurch gekennzeichnet, daß der Stein (1) im Bereich seiner Seitenflächen (3) Längentoleranzen von weniger als 1 mm aufweist und die Abstandhalter (4;4';4'') mit einer Breite (B) von 2 mm ausgebildet sind.

8. Betonpflasterstein, an dessen Seitenflächen (3;11,12;11',12') jeweils zumindest ein in Verlegestellung zu einem nebengeordneten Stein (1) hin eine Sollfuge (2) bildender Abstandhalter (4) vorgesehen ist, **dadurch gekennzeichnet**, daß die Abstandhalter (4') einteilig geformt sind und in der Sollfuge (2) eine horizontale Verhakung bilden.

9. Betonpflasterstein nach einem der Ansprüche 1 bis 8, dadurch gekennzeichnet, daß die Abstandhalter (4;4';4'';4''') sich über einen Teilbereich (H) der Steinhöhe erstrecken und in Längsrichtung derart bemessen sind, daß über jeweilige Stützpaarungen mit flächiger oder linienförmiger Anlage ein weitgehend vollständiger Verschluß der Sollfuge (2;2') gebildet ist.

10. Betonpflasterstein nach einem der Ansprüche 1 bis 9, dadurch gekennzeichnet, daß dieser als ein Doppel-T-Stein (1') geformt ist und an dessen Schmalseitenfläche (3') in die Breite der Sollfuge (2) integrierte Verhakungsprofile (4''') vorgesehen sind.
